# EUROPÄISCHE PATENTSCHRIFT

(11) **EP 0 620 656 B1**
(45) Veröffentlichungstag und Bekanntmachung des Hinweises auf die Patenterteilung: **07.07.1999**
(21) Anmeldenummer: 94104893.6
(22) Anmeldetag: 28.03.1994
(51) Int. Cl.: H04B 1/40

(54) **Sender-/Empfängeranordnung für höhere Frequenzen**
Transceiver for high frequencies
Emetteur-récepteur pour haute-fréquences

(30) Priorität: 13.04.1993 DE 4312020
(43) Veröffentlichungstag der Anmeldung: 19.10.1994
(73) Patentinhaber: SIEMENS AKTIENGESELLSCHAFT, 80333 München (DE)
(72) Erfinder: Fenk, Josef, Dipl.-Ing., D-85386 Eching (DE); Herrmann, Helmut, Dipl.-Ing., D-81667 München (DE); Sehrig, Peter, Ing. grad., D-82343 Pöcking (DE); Veit, Werner, Dipl.-Ing., D-81739 München (DE)

(56) Entgegenhaltungen:
- EP-A- 0 206 247
- EP-A- 0 398 688
- EP-A- 0 529 767
- US-A- 1 584 623
- PATENT ABSTRACTS OF JAPAN vol. 5, no. 159 (E-77) 14. Oktober 1981 & JP-A-56 089 136 (TOSHIBA CORP)

## Beschreibung

Die Erfindung betrifft eine Sender-/Empfängeranordnung für höhere Frequenzen, insbesondere für Anwendungen im Mobilfunkbereich.

Bei Schaltungsanordnungen der Hochfrequenztechnik und insbesondere der Mobilfunktechnik wird ein möglichst hoher Integrationsgrad angestrebt, um Kosten und Abmessungen des Endprodukts gering zu halten. Dadurch wird meistens ein fertiges Schaltungskonzept vorgegeben, daß dem Anwender des integrierten Schaltkreises nur wenige Änderungsmöglichkeiten läßt. Aber gerade in der Hochfrequenztechnik ist eine hohe Flexibilität von Vorteil, da Schaltungsanpassungen hinsichtlich Rauschen, Empfindlichkeit, Übersprechen etc. hierbei meist mit größeren Abwandlungen bis hin zur Änderung des Schaltungskonzepts selbst verbunden sind. Das wiederum bedeutet häufig zusätzlichen Schaltungsaufwand oder den Wechsel zu anderen Schaltkreisen, was mit weiteren Kosten verbunden ist. Zudem ist dies auch für die Hersteller der Schaltkreise von Nachteil, da sie für unterschiedliche Anforderungen unterschiedliche Schaltkreise anbieten müßten.

Aus dem Stand der Technik EP 0 529 767 A1 ist eine digitale Sende-/Empfangsvorrichtung bekannt. Der Empfänger umfaßt einen ersten Frequenzwandler zur Erzeugung einer ersten Zwischenfrequenz und einen nachgeschalteten Quadraturdemodulator. Der Sender umfaßt einen Quadraturmodulator zur Erzeugung eines quadraturmodullierten zweiten Zwischenfrequenzsignals und einen dem Quadraturmodulator nachgeschalteten zweiten Frequenzwandler, der das Sendesignal erzeugt. Die Frequenzdifferenz zwischen der ersten und der zweiten Zwischenfrequenz wird in Bezug zum Frequenzintervall zwischen Sendefrequenz und Empfangsfrequenz gesetzt. Die Frequenz eines der beiden Zwischenfrequenzsignale wird auf ein ganzzahliges Vielfaches der Frequenz des anderen Zwischenfrequenzsignals gesetzt.

Aufgabe der Erfindung ist es daher, eine integrierbare Sender-/Empfängeranordnung für höhere Frequenzen anzugeben, die für verschiedene Schaltungskonzepte geeignet ist.

Die Aufgabe wird gelöst durch eine Sender/Empfängeranordnung mit einem Empfangszweigmischer, der ein Empfangssignal und ein Trägerfrequenzsignal miteinander multipliziert, mit einem durch ein Schaltsteuersignal abschaltbaren, gesteuerten ersten Zwischenfrequenzoszillator, dessen Frequenzbereich durch ein erstes Bereichssteuersignal umschaltbar ist, mit einem dem Empfangszweigmischer nachgeschalteten Demodulator, dem zudem das Ausgangssignal des ersten Zwischenfrequenzoszillators direkt und um 90° phasenverschoben zugeführt wird und der ein Ausgangssignal abgibt, mit einem dem ersten Zwischenfrequenzoszillator parallelgeschalteten, gesteuerten zweiten Zwischenfrequenzoszillator, der durch das Schaltsteuersignal einschaltbar ist, mit einer dem ersten und zweiten Zwischenfrequenzoszillator nachgeschalteten und diese steuernde Phasendetektoreinrichtung, deren Frequenzbereich durch ein zweites Bereichssteuersignal umschaltbar ist, mit einem Sendezweigmischer, dessen einer Eingang mit den Ausgängen von erstem und zweitem Zwischenfrequenzoszillator verbunden ist und an dessen anderen Eingang das Trägerfrequenzsignal angelegt ist, und mit einem dem Sendezweigmischer nachgeschalteten Modulator, dem zudem ein Eingangssignal zugeführt wird und der ein Sendesignal abgibt.

Die erfindungsgemäße Anordnung bietet dem Anwender zahlreiche Anpassungsmöglichkeiten, wobei bevorzugt folgende drei Betriebsarten bzw. Schaltungskonzepte gewählt werden.

Eine erste Betriebsart sieht vor, daß der erste Zwischenfrequenzoszillator eingeschaltet und der zweite Zwischenfrequenzoszillator abgeschaltet ist und daß der erste Zwischenfrequenzoszillator und die Phasendetektionseinrichtung in den gleichen Frequenzbereich geschaltet sind.

Bei einer zweiten Betriebsart ist ebenfalls der erste Zwischenfrequenzoszillator eingeschaltet und der zweite Zwischenfrequenzoszillator abgeschaltet. Allerdings werden der erste Zwischenfrequenzoszillator und die Phasendetektionseinrichtung zwischen unterschiedlichen Frequenzbereichen umgeschaltet.

Schließlich ist in einer dritten Betriebsart bei Sendebetrieb der erste Zwischenfrequenzoszillator abgeschaltet und der zweite Zwischenfrequenzoszillator eingeschaltet, während im Emfpangsbetrieb der zweite Zwischenfrequenzoszillator abgeschaltet und der erste Zwischenfrequenzoszillator eingeschaltet ist. Erster und zweiter Zwischenfrequenzoszillator weisen dabei unterschiedliche Frequenzbereiche auf, wobei die Phasendetektionseinrichtung im Sendebetrieb auf den Frequenzbereich des zweiten Zwischenfrequenzoszillators und im Empfangsbetrieb auf den Frequenzbereich des ersten Zwischenfrequenzoszillators geschaltet ist.

Bei einer bevorzugten Ausführungsform ist die Phasendetektionseinrichtung durch einen Phasendetektor mit vorgeschaltetem Frequenzteiler gegeben, dessen Teilerverhältnis über das zweite Bereichssteuersignal umschaltbar ist.

Zudem kann vorgesehen werden, daß das Trägerfrequenzsignal durch einen steuerbaren Oszillator erzeugt wird.

Die Erfindung wird nachfolgend anhand der Figuren der Zeichnung näher erläutert. Es zeigt:
- FIG 1: eine allgemeine Ausführungsform einer erfindungsgemäßen Anordnung in einem Prinzipschaltbild,
- FIG 2: eine erste Betriebsart,
- FIG 3: eine zweite Betriebsart und
- FIG 4: eine dritte Betriebsart der Anordnung nach FIG 1.

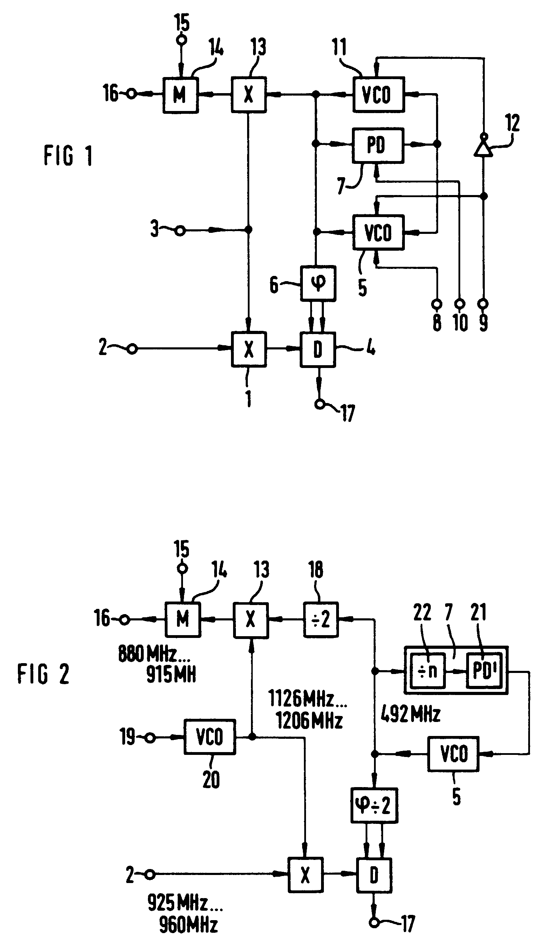

Die Sender-/Empfängeranordnung nach FIG 1 enthält einen Empfangszweigmischer 1, dem ein Empfangssignal 2 sowie ein Trägerfrequenzsignal 3 zugeführt werden. Der Empfangszweigmischer 1 bildet das Produkt aus dem Empfangssignal 2 und dem Trägerfrequenzsignal 3 und leitet dies an eine Demodulationseinheit 4 weiter, der zudem das Ausgangssignal eines steuerbaren Oszillators 5 direkt und um 90° phasenverschoben zugeführt wird und die ein Ausgangssignal 17 abgibt. Die Phasenverschiebung wird beim gezeigten Ausführungsbeispiel mittels eines Phasenschiebers 6 erzeugt. Derart phasenverschobene Signale können aber in gleicher Weise beispielsweise auch durch den steuerbaren Oszillator 5 selbst erzeugt werden.

Die Frequenz des Oszillators 5 wird durch einen Phasendetektor 7 innerhalb eines bestimmten Frequenzbereiches gesteuert. Dieser Frequenzbereich kann durch ein Bereichssteuersignal 8 geändert werden. Zudem ist der Oszillator 5 mittels eines Schaltsteuersignals 9 abschaltbar. Mittels eines Bereichssteuersignals 10 ist auch der Frequenzbereich der Phasendetektionseinrichtung 7, deren Eingang mit dem Ausgang des Oszillators 5 verbunden ist, umschaltbar. Dem Oszillator 5 ist ein gesteuerter Oszillator 11 parallelgeschaltet, der durch das Schaltsteuersignal 9 einschaltbar ist. Da immer nur einer der beiden Oszillatoren 5 und 11 in Betrieb sein soll, ist zwischen die entsprechenden Eingänge für das Schaltsteuersignal 9 ein Inverter 12 geschaltet. Die Ausgänge der Oszillatoren 5 und 11 sind auf einen Eingäng eines Sendezweigmischers 13 geführt, der zusätzlich durch das Trägerfrequenzsignal 3 angesteuert wird. Schließlich ist dem Sendezweigmischer ein Modultator 14 nachgeschaltet, an den zur Modulation zusätzlich ein Eingangssignal 15 angelegt ist und der ein Sendesignal 16 abgibt. Die gezeigte Anordnung ist ganz oder teilweise integrierbar, wobei auch eine Aufteilung auf zwei getrennte integrierte Schaltkreise vorteilhaft ist. Dabei wird dem Anwender der Einsatz mehrerer verschiedener Schaltungskonzepte ermöglicht, von denen drei bevorzugte Schaltungsprinzipien (Betriebsarten) ermöglicht werden. Bei den nachfolgend gezeigten Betriebsarten wird jeweils von einer Anwendung ausgegangen, bei der das Sendesignal im Bereich zwischen 880 und 915 MHz und das Empfangssignal im Bereich zwischen 925 und 960 MHz liegt. Außerdem wird ein Phasenschieber verwendet, dessen zueinander phasenverschobene Ausgangssignale die halbe Frequenz des Eingangssignals aufweisen. Aus diesem Grund ist vor den Sendezweigmischer 13 ein Frequenzteiler mit dem Teilerverhältnis 1 : 2 vorgeschaltet und die Frequenz des Oszillators 5 bzw. 11 verdoppelt. Weiterhin besteht die Phasendetektionseinheit 7 aus einem auf einer festen Frequenz arbeitenden Phasendetektor PD', dem ein Teiler mit umschaltbaren Teilerverhältnis vorgeschaltet ist. Schließlich wird das Trägerfrequenzsignal 3 durch einen gesteuerten Trägerfrequenzoszillator 20 erzeugt.

In den nachfolgend beschriebenen Figuren 2 bis 4 der Zeichnungen sind gleiche Elemente mit gleichen Bezugszeichen versehen und bei der jeweiligen Betriebsart nicht im Betrieb befindliche Einheiten sind nicht und abwechselnd geschaltete Einheiten sind gestrichelt gezeichnet.

Bei der Betriebsart nach FIG 2 ist nur der Oszillator 5 eingeschaltet und der Oszillator 5 und die Phasendetektionseinrichtung 7 arbeiten im gleichen Frequenzbereich, beispielsweise bei einer Frequenz von 492 MHz.

Bei dieser Betriebsart wird zwar ein Oszillator 20 mit großem Durchstimmbereich von 1126 bis 1206 MHz benötigt, jedoch ist nur einer der beiden Oszillatoren 5 und 11 in Betrieb, wodurch eine geringere Stromaufnahme erzielt wird.

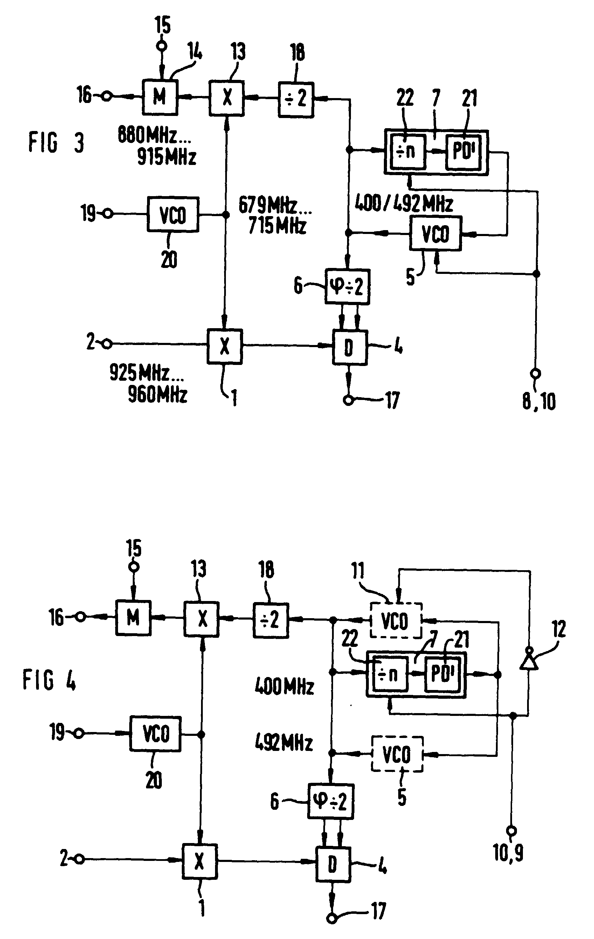

Bei der Betriebsart nach FIG 3 ist ebenfalls nur der Oszillator 5 eingeschaltet. Der Oszillator 5 und die Phasendetektionseinheit 7 werden dabei zwischen zwei Frequenzbereichen, beispielsweise zwischen den Festfrequenzen 400 MHz und 492 MHz, entsprechend Sende- und Empfangsbetrieb umgeschaltet. Die Schaltungsstruktur entspricht dabei im wesentlichen der nach FIG 2. Im Unterschied dazu werden aber der Oszillator 5 und die Phasendetektionseinheit 7 zwischen den genannten Bereichen umgeschaltet.

Der Trägerfrequenzoszillator arbeitet dabei vorteilhafterweise bei niedriger Schwingfrequenz und über einen kleinen Durchstimmbereich von 679 bis 715 MHz. Auch bei dieser Betriebsart sind nur zwei Oszillatoren, nämlich der Oszillator 5 und der Oszillator 20, in Betrieb. Der Stromverbrauch ist ebenfalls gering.

Bei der Betriebsart nach FIG 4 ist im Sendebetrieb der Oszillator 11 eingeschaltet und der Oszillator 5 abgeschaltet. Umgekehrt ist im Empfangsbetrieb der Oszillator 11 abgeschaltet und der Oszillator 5 eingeschaltet. Die Oszillatoren 5 und 11 arbeiten dabei in unterschiedlichen Frequenzbereichen. So arbeitet beispielsweise der Oszillator 11 im Sendebetrieb bei 400 MHz und der Oszillator 5 im Emfpangsbetrieb bei 492 MHz. Die Phasendetektionseinheit 7 arbeitet daher im Sendebetrieb auf der Frequenz des Oszillators 11, also bei ungefähr 400 MHz und bei Empfangsbetrieb im Frequenz des Oszillators 5, also bei ungefähr 492 MHz. Das Umschalten der Phasendetektionseinheit 7 und das An- bzw. Abschalten der Oszillatoren 5 und 11 erfolgt mit den Steuersignalen 10 und 9.

Der Trägerfrequenzoszillator 20 arbeitet hierbei wiederum bei niedriger Schwingfrequenz im Bereich zwischen 679 und 715 MHz und weist einen kleinen Durchstimmbereich auf. Da die Oszillatoren 5 und 11 abwechselnd eingeschaltet sind, also immer nur einer der beiden in Betrieb ist, wird wiederum ein geringerer Stromverbrauch erzielt.

Bevorzugt werden der Modulator 14, der Sendezweigmischer 13, ggf. der Teiler 18, der gesteuerte Oszillator 11, die Phasendetektionseinheit 7 und ggf. der Trägerfrequenzoszillator 20 in einem Schaltkreis integriert, während der Empfangszweigmischer 1, der Demodulator 4, der gesteuerte Oszillator 5 und ggf. der Phasenschieber 6 werden in einen anderen Schaltkreis integriert werden. Damit werden Sende- und Empfangskreis weitgehend entkoppelt. Darüber hinaus sind frequenzbestimmende Elemente wie Induktivitaten und Kapazitaten als diskrete Elemente ausgeführt. Damit wird bei der vorgestellten Sende-/Empfängeranordnung eine äußerst flexible Systemarchitektur ermöglicht. Wie gezeigt wurde, können mindestens drei verschiedene Betriebsvarianten realisiert werden, ohne daß eine Modifikation der Schaltungen auf dem Chip notwendig wäre. Dies wird durch eine einzige, in der Frequenz umschaltbare Phasendetektionseinheit in Verbindung mit einem in der Frequenz ebenfalls umschaltbaren gesteuerten Oszillator erreicht. Darüber hinaus ist ein weiterer gesteuerte Oszillator vorgesehen, der wahlweise an Stelle des umschaltbaren Oszillators eingesetzt werden kann. Sämtliche gesteuerten Oszillatoren sind derart ausgeführt, daß sie wahlweise mit Hilfe externer passiver Komponenten als Oszillatoren oder als Eingangsbuffer für Signale, die von externen Oszillatoren erzeugt werden, betrieben werden.

Wie gezeigt wurde, bietet die erfindungsgemäße Anordnung dem Anwender den Vorteil einer höchst flexiblen Systemarchitektur. Dieser muß sich nicht von Anfang an auf ein Konzept festlegen, sondern kann die Vor- und Nachteile der verschiedenen Konzepte für sich abwägen und sich dann individuell entscheiden.

## Patentansprüche

1. Sender-/Empfängeranordnung mit einem Empfangszweigmischer (1) der ein Empfangssignal (2) und ein Trägerfrequenzsignal (3) miteinander multipliziert, mit einem durch ein Schaltsteuersignal (9) abschaltbaren, gesteuerten ersten Zwischenfrequenzoszillator (5), dessen Frequenzbereich durch ein erstes Bereichssteuersignal (8) umschaltbar ist, mit einem dem Empfangszweigmischer (1) nachgeschalteten Demodulator, dem zudem das Ausgangssignal des ersten Zwischenfrequenzoszillators (5) direkt und um 90° phasenverschoben zugeführt wird und der ein Ausgangssignal (17) abgibt, mit einem dem ersten Zwischenfrequenzoszillator (5) parallelgeschalteten, gesteuerten zweiten Zwischenfrequenzoszillator (11), der durch das Schaltsteuersignal (9) einschaltbar ist, mit einer dem ersten und zweiten Zwischenfrequenzoszillator (5, 11) nachgeschalteten und diese steuernde Phasendetektoreinrichtung (7), deren Frequenzbereich durch ein zweites Bereichssteuersignal (10) umschaltbar ist, mit einem Sendezweigmischer (13), dessen einer Eingang mit den Ausgängen des ersten und des zweiten Zwischenfrequenzoszillators (5, 11) verbunden ist und an dessen anderem Eingang das Trägerfrequenzsignal (3) angelegt ist, und mit einem dem Sendezweigmischer (13) nachgeschalteten Modulator (14), dem zudem ein Eingangssignal (15) zugeführt wird und der ein Sendesignal (16) abgibt.

2. Anordnung nach Anspruch 1,
**dadurch gekennzeichnet,**
daß der erste Zwischenfrequenzoszillator (5) eingeschaltet und der zweite Zwischenfrequenzoszillator (11) abgeschaltet ist und daß der erste Zwischenfrequenzoszillator (5) und die Phasendetektionseinrichtung (7) in den gleichen Frequenzbereich geschaltet sind.

3. Anordnung nach Anspruch 1,
**dadurch gekennzeichnet,**
daß der erste Zwischenfrequenzoszillator (5) eingeschaltet ist und daß der erste Zwischenfrequenzoszillator (5) und die Phasendetektionseinrichtung (7) zwischen zwei Frequenzbereichen bei Sende- und Empfangsbetrieb umgeschaltet werden.

4. Anordnung nach Anspruch 1,
**dadurch gekennzeichnet,**
daß im Sendebetrieb der erste Zwischenfrequenzoszillator (5) abgeschaltet und der zweite Zwischenfrequenzoszillator (11) eingeschaltet ist, daß im Empfangsbetrieb der zweite Zwischenfrequenzoszillator (11) abgeschaltet und der erste Zwischenfrequenzoszillator (5) eingeschaltet ist, daß erster und zweiter Zwischenfrequenzoszillator (5, 11) unterschiedliche Frequenzbereiche aufweisen und daß die Phasendetektionseinrichtung (7) im Sendebetrieb auf den Frequenzbereich des zweiten Zwischenfrequenzoszillator (11) und im Empfangsbetrieb auf den Frequenzbereich des ersten Zwischenfrequenzoszillator (5) geschaltet ist.

5. Anordnung nach einem der Ansprüche 1 bis 4,
**dadurch gekennzeichnet,**
daß die Phasendetektionseinrichtung (7) aus einem Phasendetektor (21) und einem vorgeschalteten Frequenzteiler (22) besteht, dessen Teilerverhältnis über das zweite Bereichssteuersignal (10) umschaltbar ist.

6. Anordnung nach einem der Ansprüche 1 bis 5,
**dadurch gekennzeichnet,**
daß das Trägerfrequenzsignal durch einen steuerbaren Oszillator (20) erzeugt wird.

## Claims

1. Transmitter/receiver arrangement having a receiving path mixer (1) which multiplies a received signal (2) and a carrier frequency signal (3) by one another, having a controlled, first intermediate frequency oscillator (5) which can be switched off by a switching control signal (9) and whose frequency band can be changed by a first band control signal (8), having a demodulator which is connected downstream of the receiving path mixer (1) and to which, in addition, the output signal from the first intermediate frequency oscillator (5) is supplied both directly and phase-shifted through 90° and which emits an output signal (17), having a controlled, second intermediate frequency oscillator (11) which is connected in parallel with the first intermediate frequency oscillator (5) and can be switched on by the switching control signal (9), having a phase detector device (7) which is connected downstream of the first and the second intermediate frequency oscillator (5, 11), controls the latter and whose frequency band can be changed by a second band control signal (10), having a transmission path mixer (13) one of whose inputs is connected to the outputs of the first and of the second intermediate frequency oscillator (5, 11) and to whose other input the carrier frequency signal (3) is applied, and having a modulator (14) which is connected downstream of the transmission path mixer (13), emits a transmission signal (16) and to which an input signal (15) is additionally supplied.

2. Arrangement according to Claim 1, characterized in that the first intermediate frequency oscillator (5) is switched on and the second intermediate frequency oscillator (11) is switched off, and in that the first intermediate frequency oscillator (5) and the phase detection device (7) are switched to the same frequency band.

3. Arrangement according to Claim 1, characterized in that the first intermediate frequency oscillator (5) is switched on and in that the first intermediate frequency oscillator (5) and the phase detection device (7) are changed between two frequency bands for the transmission mode and reception mode.

4. Arrangement according to Claim 1, characterized in that, in the transmission mode, the first intermediate frequency oscillator (5) is switched off and the second intermediate frequency oscillator (11) is switched on, in that, in the reception mode, the second intermediate frequency oscillator (11) is switched off and the first intermediate frequency oscillator (5) is switched on, in that the first and the second intermediate frequency oscillator (5, 11) have different frequency bands, and in that the phase detection device (7) is switched, in the transmission mode, to the frequency band of the second intermediate frequency oscillator (11) and, in the reception mode, to the frequency band of the first intermediate frequency oscillator (5).

5. Arrangement according to one of Claims 1 to 4, characterized in that the phase detection device (7) comprises a phase detector (21) and an upstream frequency divider (22) whose division ratio can be changed via the second band control signal (10).

6. Arrangement according to one of Claims 1 to 5, characterized in that the carrier frequency signal is produced by a controllable oscillator (20).

## Revendications

1. Dispositif émetteur récepteur comportant un mélangeur de branche réceptrice (1) qui multiplie un signal de réception (2) par un signal de fréquence porteuse (3), un premier oscillateur à fréquence intermédiaire (5) qui est commandé et interruptible par un signal de commande de commutation (9) et dont le domaine fréquentiel peut être commuté par un premier signal de commande de domaine (8), un démodulateur qui est branché du côté aval du mélangeur de branche réceptrice (1), qui reçoit en plus le signal de sortie du premier oscillateur à fréquence intermédiaire (5) directement ainsi que déphasé de 90° et qui fournit un signal de sortie (17), un deuxième oscillateur à fréquence intermédiaire (11) commandé qui est branché en parallèle avec le premier oscillateur à fréquence intermédiaire (5) et qui peut être connecté par le signal de commande de commutation (9), un dispositif détecteur de phase (7) qui est branché du côté aval du premier (5) et du deuxième (11) oscillateur à fréquence intermédiaire, qui commande ceux-ci et dont le domaine fréquentiel peut être commuté par un deuxième signal de commande de domaine (10), un mélangeur de branche émettrice (13) dont une entrée est reliée aux sorties du premier (5) et du deuxième (11) oscillateur à fréquence intermédiaire et dont l'autre entrée reçoit le signal de fréquence porteuse (3), et un modulateur (14) qui est branché du côté aval du mélangeur de branche émettrice (13), qui reçoit en plus un signal d'entrée (15) et qui fournit un signal d'émission (16).

2. Dispositif selon la revendication 1,
caractérisé par le fait que le premier oscillateur à fréquence intermédiaire (5) est connecté et le deuxième oscillateur à fréquence intermédiaire (11) est arrêté et que le premier oscillateur à fréquence intermédiaire (5) et le dispositif détecteur de phase (7) sont commutés sur le même domaine fréquentiel.

3. Dispositif selon la revendication 1,
caractérisé par le fait que le premier oscillateur à fréquence intermédiaire (5) est connecté et que le premier oscillateur à fréquence intermédiaire (5) et le dispositif détecteur de phase (7) sont commutés entre deux domaines fréquentiels lors du fonctionnement en émission ou en réception.

4. Dispositif selon la revendication 1,
caractérisé par le fait que, lors du fonctionnement en émission, le premier oscillateur à fréquence intermédiaire (5) est arrêté et le deuxième oscillateur à fréquence intermédiaire (11) est connecté, que, lors du fonctionnement en réception, le deuxième oscillateur à fréquence intermédiaire (11) est arrêté et le premier oscillateur à fréquence intermédiaire (5) est connecté, que le premier (5) et le deuxième (11) oscillateur à fréquence intermédiaire ont des domaines fréquentiels différents et que le dispositif détecteur de phase (7) est commuté, lors du fonctionnement en émission, sur le domaine fréquentiel du deuxième oscillateur à fréquence intermédiaire (11) et, lors du fonctionnement en réception, sur le domaine fréquentiel du premier oscillateur à fréquence intermédiaire (5).

5. Dispositif selon l'une des revendications 1 à 4,
caractérisé par le fait que le dispositif détecteur de phase (7) est constitué d'un détecteur de phase (21) et d'un diviseur de fréquence (22) qui est branché du côté amont et dont le rapport de division peut être commuté par l'intermédiaire du deuxième signal de commande de domaine (10).

6. Dispositif selon l'une des revendications 1 à 5,
caractérisé par le fait que le signal de fréquence porteuse est produit par un oscillateur commandable (20).
